Europäisches Patentamt

European Patent Office

Office européen des brevets

(11) Publication number : **0 547 744 A1**

(19)

(12) # EUROPEAN PATENT APPLICATION

(21) Application number : **92308812.4**

(22) Date of filing : **28.09.92**

(51) Int. Cl.⁵ : **C22B 3/00, C22B 47/00**

(30) Priority : **09.10.91 JP 289505/91**

(43) Date of publication of application :
**23.06.93 Bulletin 93/25**

(84) Designated Contracting States :
**FR**

(71) Applicant : **PACIFIC METALS Co., Ltd.**
**6-1 Ohtemachi 1-chome, Chiyoda-ku**
**Tokyo (JP)**

(72) Inventor : **Koike, Shinkichi, c/o Hachinohe**
**Works**
**Pacific Metals Co., Ltd., Toyama-shinden**
**Kawaragi, Hachinohe Aomori (JP)**
Inventor : **Murai, Kosuke, c/o Hachinohe**
**Works**
**Pacific Metals Co., Ltd., Toyama-shinden**
**Kawaragi, Hachinohe Aomori (JP)**

Inventor : **Yakushizi, Hiromasa, c/o Hachinohe**
**Works**
**Pacific Metals Co., Ltd., Toyama-shinden**
**Kawaragi, Hachinohe Aomori (JP)**
Inventor : **Izumimoto, Susumu, c/o Hachinohe**
**Works**
**Pacific Metals Co., Ltd., Toyama-shinden**
**Kawaragi, Hachinohe Aomori (JP)**
Inventor : **Wakamatsu, Ryuzo, c/o Hachinohe**
**Works**
**Pacific Metals Co., Ltd., Toyama-shinden**
**Kawaragi, Hachinohe Aomori (JP)**
Inventor : **Nishimura, Etsuro, c/o Pacific Metals**
**Co., Ltd.**
**6-1 Ohtemachi 1-chome, Chiyoda-ku**
**Tokyo (JP)**
Inventor : **Hayami, Seinoshin, c/o Pacific**
**Metals Co., Ltd.**
**6-1 Ohtemachi 1-chome, Chiyoda-ku**
**Tokyo (JP)**

(74) Representative : **Stuart, Ian Alexander et al**
**MEWBURN ELLIS 2 Cursitor Street**
**London EC4A 1BQ (GB)**

(54) **Process for recovering metal from oxide ores.**

(57) A process for efficiently recovering metals such as nickel, cobalt, and manganese from oxide ores such as laterite and garnierite, said process comprising subjecting an atmospheric leaching residue to sulfuric acid leaching under a high temperature and high pressure conditions in an oxidizing atmosphere, and then carrying out atmospheric leaching on the high pressure leaching solution thus obtained together with the slurried oxide ore, in an acidic sulfuric acid solution. After neutralizing the atmospheric leaching solution thus obtained, an alkali sulfide compound is added therein to recover nickel and cobalt as sulfides. Then, a carbonate is added further to the resulting solution to recover manganese as a carbonate. Furthermore, the solution from which the metals are recovered is circulated for use as a rinsing solution, flocculant solution, and as water for slurrying the oxide ores.

Fig.2

EP 0 547 744 A1

The present invention relates to a process for recovering metals such as nickel, cobalt, and manganese from oxide ores using high pressure sulfuric acid leaching. A preferred embodiment involves selectively converting nickel and cobalt into sulfides in a simple manner from a sulfuric acid containing nickel, cobalt, and manganese, as well as impurities such as iron, aluminum, magnesium, and chromium; and preferably comprises recovering manganese in the form of a carbonate.

Preferred embodiments may provide processes for efficiently recovering metals such as nickel, cobalt, and manganese at low impurity concentration, e.g. comprising circulating and reusing the solution in the high pressure leaching of oxide ores using sulfuric acid, after once recovering the metals therefrom. The process thereby economizes on both rinsing water and process water, while suppressing leaching of iron, aluminum, and chromium, taking advantage of sodium being incorporated in the recirculated solution.

A process for recovering nickel and cobalt from nickel- and cobalt-containing oxide ores using sulfuric acid solution is well known in the art, and reference may be made to, for example, U.S. Patent No. 2,872,306 and Journal of Metals, March issue (1960) p.206.

In a conventional process comprising acid leaching nickel and cobalt under the atmospheric pressure using sulfuric acid, the co-existing iron is inevitably leached out with nickel and cobalt. The leaching out of iron not only consumes a large amount of sulfuric acid, but also requires considerable amount of a neutralization reagent in the subsequent neutralizing step. Hence, the process is not favorable from an economical viewpoint.

As a solution to the problem of iron leaching, it is taught in the foregoing literature, i.e., Journal of Metals, March issue (1960), to carry out the acid leaching under a high temperature and applying a high pressure to prevent iron from leaching out. However, under the sufficient abundance of sulfuric acid for leaching nickel and cobalt, the leaching of impurities such as iron, aluminum, and chromium, though in a smaller extent, still takes place. These impurities consume sulfuric acid and hence the process suffers poor economy.

Furthermore, the process requires removal of iron and aluminum as hydroxides. Hydroxides of iron and aluminum, however, are in the form of a gel which cannot be easily separated by either of the process using a thickener or the filtration process using a filter press, etc. Accordingly, it is preferred to reduce the content of those elements to a level as low as possible.

In a prior art process for recovering nickel and cobalt as sulfides from a sulfuric acid containing nickel and cobalt, the sulfidization is performed using hydrogen sulfide gas under a pressure of from 2 to 10 kg/cm$^2$ and operating an autoclave at a temperature as high as 100°C or even higher. However, the use of an autoclave is disadvantageous in that the operation should be stopped frequently to remove the sulfides which adhere to the inner wall of the autoclave. Furthermore, because the actual reaction taking place in the autoclave is such between a hydrogen sulfide gas and a sulfuric acid solution containing nickel and cobalt, the reaction becomes so sluggish that it requires incorporation of a seed crystal into the starting material. Only by taking such measures, it is possible to obtain sulfides having favorable filtration characteristics. However, the seed crystals must be added at a large amount, and hence the process requires scaling up of the apparatus. Another disadvantage in this process resides in the handling of the toxic hydrogen sulfide gas. It also requires a complicated apparatus to assure safety.

In the light of the circumstances described in the foregoing, the present invention provides a process for selectively recovering nickel and/or cobalt as sulfides from a sulfuric acid solution which may contain nickel, cobalt, manganese and possibly one or more additional metals e.g. iron, aluminum, magnesium, or chromium, the solution having been obtained by high pressure sulfuric acid leaching process. The process comprises reacting an alkali sulfide compound with the sulfuric acid containing nickel and/or cobalt, preferably under atmospheric pressure and preferably at not higher than 100°C, thereby efficiently and safely recovering nickel sulfide and/or cobalt sulfide in a shorter process time. Furthermore, the process can be carried out without using any autoclaves.

The present invention also allows recovery of manganese as manganese carbonate by adding a carbonate to the sulfuric acid solution from which nickel and/or cobalt were already recovered as sulfides.

The present invention furthermore provides a process in which the solution once subjected to recovery of nickel, cobalt, or manganese is reused in the high pressure sulfuric acid leaching step of oxide ores, thereby increasing the leaching rate of nickel and also suppressing leaching out of impurities such as iron, aluminum, and chromium.

Specifically, the present invention provides firstly a process for recovering metals such as nickel, cobalt, and manganese from an oxide ore such as laterite and garnierite, which comprises:

subjecting a previously prepared slurry of said oxide ores and a high pressure acid leaching solution obtained in a separate process to atmospheric leaching in an acidic sulfuric acid solution, to thereby obtain an atmospheric leaching solution and an atmospheric leaching residue;

reacting the atmospheric leaching residue obtained in the previous step with sulfuric acid under an oxidative atmosphere at a temperature and pressure sufficiently high to form a high pressure acid leaching solution, thereby obtaining the desired high pressure acid leaching solution; and

neutralizing the atmospheric leaching solution obtained in the first step by adding therein a neutralizing reagent, and further adding therein an alkali sulfide compound to recover nickel and cobalt therefrom as sulfides.

The present invention also provides a process which further comprises, after the third step of the first embodiment, an additional step comprising:

adding a carbonate into the solution after nickel and cobalt are recovered as sulfides, thereby recovering manganese as manganese carbonate.

The present invention further provides a process, which comprises, after the third step of the first embodiment, an additional step comprising:

circulating and using the solution from which nickel and cobalt are recovered as sulfides, as a rinsing solution for the high pressure acid leaching residue, as a flocculant solution for flocculating and separating the high pressure acid leaching residue from the high pressure acid leaching solution, and as a flocculant solution for flocculating and separating the atmospheric acid leaching residue from the atmospheric acid leaching solution.

The present invention still provides a process, which comprises, after the step of recovering manganese as manganese carbonate, an additional step comprising:

circulating and using the solution from which nickel, cobalt and manganese are recovered to increase the leaching out of nickel and also to suppress leaching out of impurities such as iron, aluminum, and chromium.

Embodiments of the invention will now be described by way of example with reference to the accompanying drawings in which:

Fig 1 shows a process flow diagram of a process for recovering nickel and cobalt from oxide ores, and for circulating and reusing the solution from which nickel and cobalt are once recovered; and

Fig. 2 shows a process flow diagram of a process for recovering nickel, cobalt, and manganese from oxide ores, and for circulating and reusing the solution from which nickel, cobalt, and manganese are once recovered.

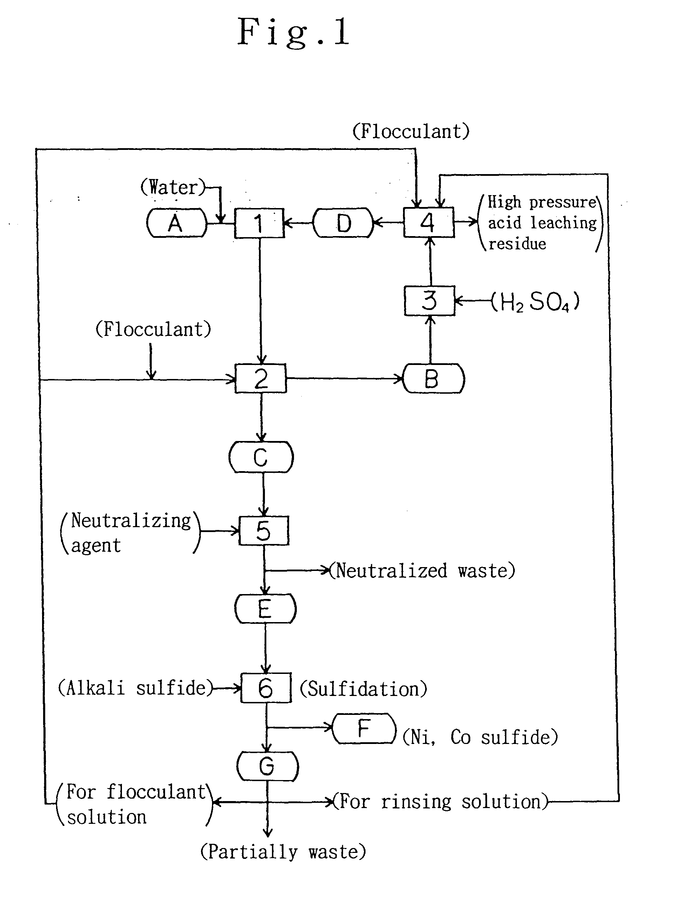

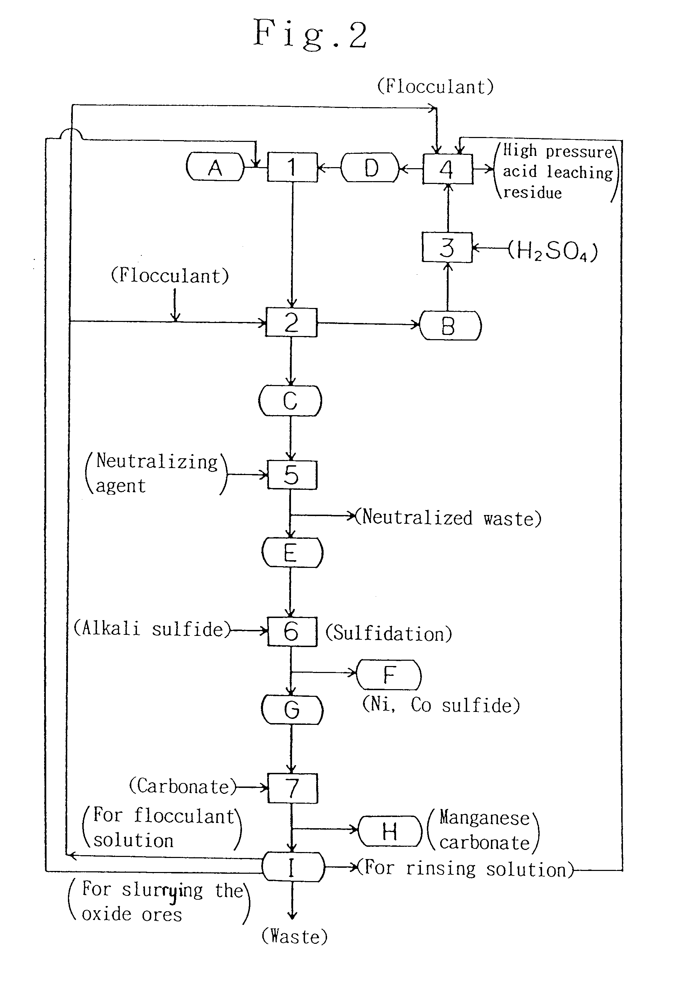

Embodiments of the present invention are described in further detail below, referring to Figs 1 and 2, which each show the process flow diagram of a process for recovering metals.

As shown in Fig 1, the process comprises slurrying an oxide ore A, and after adding therein a high pressure acid leaching solution D, effecting atmospheric leaching 1 at a temperature of from 80 to 100°C for about 2 to 3 hours. In this step, the free sulfuric acid in the high pressure acid leaching solution is allowed to react with magnesium in the oxide ore. Thus, the concentration of both free sulfuric acid and magnesium in the oxide ore becomes lower.

Then, the atmospheric leaching residue B is separated from atmospheric leaching solution C in a thickener 2. The whole atmospheric leaching residue is circulated and subjected to a high pressure acid leaching 3 using sulfuric acid, at a temperature of from 220 to 270°C and under a pressure of from 20 to 50 atm, for a duration of from 10 to 60 minutes.

The use of the whole atmospheric leaching residue in the high pressure acid leaching enables the high pressure acid leaching to be carried out in the presence of magnesium at a far lower concentration as compared with that of the oxide ore. Furthermore, because the particles of the atmospheric leaching residue are finely divided and hence increased in specific surface area during the reaction between magnesium and free sulfuric acid at the atmospheric leaching, the process enables leaching of nickel, cobalt, and manganese using less amount of sulfuric acid.

The process further comprises, as shown in FIG. 1 and FIG. 2, circulating and reusing a solution G containing sodium and ammonium after recovering nickel and cobalt therefrom as sulfides and a solution I after recovering manganese therefrom as corbonate. The solutions G and I are used as a rinsing solution for the high pressure acid leaching residue in a thickener 4, as a flocculant solution for flocculating and separating the high pressure acid leaching residue from the high pressure acid leaching solution, and as a flocculant solution for flocculating and separating the atmospheric acid leaching residue from the atmospheric acid leaching solution in a thickener 2. In this step, the high pressure sulfuric acid leaching is effected on the oxide ore using a solution containing sodium and ammonium. Thus, the leaching out of impurities such as iron, aluminum, and chromium is suppressed because of the presence of sodium and ammonium, and hence the leaching rate for nickel and cobalt is reversely increased.

In carrying out this step, the recovered solution is reused in such an amount that the sulfates account for 0.1 to 1 wt.% with respect to oxide ores, and preferably for 0.2 to 0.6 wt.%. However, the amount of the reused solution varies depending on the alkali concentration of the recovered solution, particularly on the concentration of sodium and ammonium. The flocculant for use in the present invention is preferably a polymer type.

The atmospheric leaching solution containing nickel, cobalt, and manganese with low impurity concentration is then subjected to neutralization 5 to control the pH thereof in the range of from 1.5 to 6.0 by adding neutralizing agents such as calcium hydroxide, limestone, sodium hydroxide, sodium carbonate, and ammnium hydroxide. After separating the resulting solution into a neutralization waste and a neutralized solution E, an alkali sulfide such as sodium hydrosulfide, sodium sulfide, or a mixture thereof is added to the neutralized solution E, to thereby carry out sulfidization 6 at 100°C or lower under an atmospheric pressure.

The pH of the solution above is preferably adjusted to a value of 2.0 or higher, because the recovery of nickel and cobalt considerably decreases at a pH of lower than 1.5.

The sulfidation is preferably conducted at a temperature of 60°C or higher. If the process were to be carried out at a temperature lower than 60°C, the reaction rate of the sulfides become low and hence consumes much time for the formation of the sulfides. Accordingly, a low recovery for nickel and cobalt results. A higher temperature is preferred for the reaction, but from the viewpoint of economy and due to apparatus restrictions, the process is conducted at 100°C or lower, and preferably, in the temperature range of from 60 to 80°C.

The sulfidation may be carried out under an elevated pressure condition using an autoclave. However, there is no difference with respect to the reactivity and the formation of the sulfides between a process under pressure and a one conducted under an atmospheric pressure. Hence, it is not necessary to apply a pressure. The atmosphere during the reaction is preferably reductive, but this is not in a strict sense as introducing particularly a reducing gas such as hydrogen sulfide gas and hydrogen gas. In this case, an atmosphere free from intrusion of air sufficiently works for achieving the desired result.

Sodium hydrosulfide and/or sodium sulfide are used in such an amount corresponding to 1.1 to 1.3 times the theoretical equivalent for producing nickel sulfide (NiS) and cobalt sulfide (CoS) from nickel and cobalt in the pH-adjusted solution. If the amount is lower than 1.1 times the equivalent, the recovery of nickel and cobalt results low. If the amount exceeds 1.3 times the equivalent, no further economical advantage is expected, because the recovery of nickel and cobalt attains 99% at an addition of 1.3 times the equivalent. Sodium hydrosulfide and/or sodium sulfide are used as aqueous solutions, but they may be used as solids.

Then, the thus produced nickel sulfide and cobalt sulfide F are separated from the solution G by filtration, and a part of the recovered solution is reused in the high pressure acid leaching of oxide ores using sulfuric acid.

The recovered solution G contains manganese as a commercial metal. Accordingly, sodium carbonate and ammonium carbonate are added to the solution at a pH of 9 or lower, to recover manganese carbonate through the reaction 7.

The reaction can be carried out at an ambient temperature to obtain manganese carbonate readily separable by filtration.

After recovering manganese as manganese carbonate from solution, a part of this solution I is reused in the high pressure acid leaching of oxide ores using sulfuric acid. This solution suppresses leaching out of impurities such as iron, aluminum, and chromium from the oxide ore, and hence is advantageous for preparing manganese carbonate of high quality.

The thus recovered solution, on the other hand, is trace of metals other than magnesium, calcium, and sodium, and particularly free from heavy metals. Accordingly, the solution can be directly discharged to the ocean without any fear of causing environmental pollution.

## EXAMPLE

The present invention is explained in further detail below referring to some examples. In the following examples, all ratios are percents by weight.

## EXAMPLE 1

An oxide ore containing 1.75% Ni, 0.13% Co, 0.75% Mn, 38% Fe, 1.8% Al, 2.7% Cr, and 3.6% Mg was subjected to process steps shown in FIG. 1. The solution obtained after recovering nickel and cobalt as sulfides and containing sodium at a concentration of 5.8 g/$\ell$ was circulated for reuse.

The reused solution was used into the process in such an amount of, with respect to the whole solution used in the process inclusive of water, 33% for the rinsing solution of the high pressure acid leaching residue, 15% for the flocculant solution for flocculate separation of the high pressure acid leaching solution and high pressure acid leaching residue, and 10% for the flocculant solution for flocculate separation of the atmospheric leaching residue and the atmospheric leaching solution, 58% in total.

The reused solution was rinsed by counter current in a 7-stage thickener to thereby separate high pressure acid leaching solution and high pressure acid leaching residue.

The resulting high pressure acid leaching solution was used in atomospheric leaching of a slurried oxide ore with water at 95°C for 3 hours.

As a result of the reaction between free sulfuric acid and Mg in the oxide ore, the content of free sulfuric acid in the solution was reduced from the initial 12.5 g/$\ell$ to 1.5 g/$\ell$, and accordingly, the pH of the solution was increased from 1.1 to 1.75, while the Mg in the oxide ore was 44% leached. Furthermore, the increase in pH caused 92% of Fe in the solution to form hydroxides, which were removed from the solution.

After the atmospheric leaching, the flocculant solution comprising the reused solution was used to separate the atmospheric leaching residue from the atmospheric leaching solution in the thickener. The resulting residue was transferred in the form of a slurry to the high pressure acid leaching step, while the high pressure acid leaching solution was neutralized and transferred to the sulfide recovery step. This atmospheric leaching residue in the form of a slurry was found to contain Na at an Na/ore ratio of 0.33%.

The high pressure acid leaching was carried out on 1 kg of the ore having added therein 0.238 kg of sulfuric acid, in a titanium-made autoclave at 240°C and under a pressure of 36 kg/cm$^2$.

The process found an Ni leaching ratio of 94.3% and a Co leaching ratio of 94.8%, and the ratio of the impurities to Ni in the leaching solution were found to be Fe/Ni of 0.17, Al/Ni of 0.07, and Cr/Ni of 0.004.

The Na/ore ratio after high pressure sulfuric acid leaching was found to be 0.03%. This signifies that substantially all Na was consumed in the leaching process, and that Na was used in the formation of salts with the solubilized Fe, Al, and Cr.

The resulting atmospheric leaching solution was controlled to give a pH of 3.0, by adding therein calcium hydroxide. The neutralization product and the neutralized solution were separated by filtration using a filter press, and 25% sodium hydrosulfide solution was added to the neutralized solution at such an amount corresponding to 1.2 times equivalent to the Ni and Co. Thus, the resulting solution was allowed to react at 80°C for 30 minutes.

As a result, Ni and Co were recovered as a sulfide at a recovery of 99% and 98.5%, respectively. Furthermore, the Ni-Co sulfide particles were found to have an average particle size of 28 μm, and were readily separated by filtration. The sulfide thus obtained was a high, purity Ni-Co sulfide containing very low impurities and containing: 46% Ni, 3.4% Co, 0.02% Fe, 0.06% Al, 0.07% Cr, 0.15% Mn, 0.12% Mg, and 32% S.

EXAMPLE 2

An oxide ore having the same composition as that used in Example 1 was subjected to leaching under the same conditions as those employed in Example 1, except for reusing a solution from which Mn was recovered and containing Na at a concentration of 7.6 g/$\ell$. The results obtained by the atmospheric leaching are given in Table 1, and those by the high pressure acid leaching are given in Table 2.

The Na/ore content ratio before high pressure acid leaching of 0.43% was lowered to 0.12% after the high pressure acid leaching. The results each obtained after atmospheric leaching and high pressure acid leaching are essentially the same as those obtained in Example 1.

The atmospheric leaching solution thus obtained was pH-adjusted to give a pH value of 3.0 by adding calcium hydroxide. To the thus neutralized solution were added a 1:1 mixture (in terms of sulfur content) of sodium hydrosulfide and sodium sulfide to effect sulfidation. The results obtained after this step are given in Table 3. It can be seen that favorable recoveries are obtained for both Ni and Co, and furthermore, the sulfide was recovered as particles with their size falling in a desirable range.

EXAMPLE 3

An oxide ore having the same composition as that used in Example 1 was subjected to leaching under the same conditions as those employed in Example 1, except for reusing a solution from which Mn was recovered and containing Na at a concentration of 9.8 g/$\ell$. The results obtained by the atmospheric leaching are given in Table 1, and those by the high pressure acid leaching are given in Table 2.

The Na/ore content ratio before high pressure acid leaching of 0.56% was lowered to 0.20% after the high pressure acid leaching. The results each obtained after atmospheric leaching and high pressure acid leaching are essentially the same as those obtained in Example 1.

The atmospheric leaching solution thus obtained was pH-adjusted to give a pH value of 3.0 by adding calcium hydroxide. To the thus neutralized solution was added sodium sulfide solution at an amount of 1.2 times equivalent to Ni and Co, and sulfidation was effected under the same conditions as employed in Example 1. The results are given in Table 3.

EXAMPLE 4

An oxide ore containing 1.04% Ni, 0.09% Co, 0.62% Mn, 49% Fe, 2.6% Al, 1.1% Cr, and 0.6% Mg was subjected to a leaching process under the same conditions as those used in Example 1, except for adding 0.140 kg of sulfuric acid to 1 kg of the oxide ore. The solution obtained after recovering nickel and cobalt as sulfides and containing sodium at a concentration of 3.5 g/$\ell$ was used at the same amount as in Example 1, which was circulated for reuse. The results obtained by the atmospheric leaching are given in Table 1, and those by the high pressure acid leaching are given in Table 2.

The atmospheric leaching solution thus obtained was pH-adjusted to give a pH value of 3.0 by adding calcium hydroxide. To the thus neutralized solution was added sodium sulfide solution at an amount of 1.2 times equivalent to Ni and Co, and sulfidation was effected under the same conditions as employed in Example 1. The results are given in Table 3.

EXAMPLE 5

An oxide ore having the same composition as that used in Example 4 was subjected to leaching by reusing a solution from which Mn was recovered and containing Na at a concentration of 5.2 g/$\ell$. The reused solution was incorporated into the process in such an amount of, with respect to the whole solution used in the process inclusive of water, 20% for slurring the oxide ores, 33% for the rinsing solution of the high pressure acid leaching residue, 15% for the flocculant solution for flocculate separation of the high pressure acid leaching solution and high pressure acid leaching residue, and 10% for the flocculant solution for flocculate separation of the atmospheric leaching residue and the atmospheric leaching solution, 78% in total.

The other leaching conditions were the same as those employed in Example 4. The results obtained by the atmospheric leaching are given in Table 1, and those by the high pressure acid leaching are given in Table 2.

The atmospheric leaching solution thus obtained was pH-adjusted to give a pH value of 3.0 by adding calcium hydroxide. To the thus neutralized solution was added sodium hydrosulfide solution at an amount of 1.2 times equivalent to Ni and Co, and sulfidation was effected under the same conditions as employed in Example 1. The results are given in Table 3.

COMPARATIVE EXAMPLE 1

The same oxide ore as that used in Example 1 was slurried with water. Sulfuric acid was then added to this slurry at an amount of 0.238 kg per 1 kg of the ore, and thus the ore was subjected to leaching at 240°C under a pressure of 36 kg/cm$^2$. The results are given in Table 2 for comparative means.

It can be seen that the Ni leaching ratio is considerably decreased to 86%, in contrast to the increase of the nickel and impurity concentration in the leaching solution. This signifies that the leaching of Fe, Al, and Cr has been accelerated in this case.

The sulfuric leaching solution thus obtained was then neutralized by adding calcium hydroxide thereto, and thus pH thereof was adjusted to 3.0. Than, $H_2S$ gas was blown therein in a sealed vessel maintained at a temperature of 80°C and a pressure of 2 kg/cm$^2$, to allow the reaction to take place for a duration of 60 minutes. The $H_2S$ gas blown into the solution amounted to 2.5 times equivalent of Ni and Co. Thus were obtained sulfides as given in Table 3, in comparison with other results obtained on Examples.

The Ni and Co recovery dropped to 68%, and the sulfides thus obtained were as fine as to yield an average particle size of 11 $\mu$m. The sulfide thus obtained had difficulty in smoothly operating the filtration process.

COMPARATIVE EXAMPLE 2

The process was carried out under the same conditions as those employed in Comparative Example 1 above, except for effecting the leaching by adding 0.140 kg of sulfuric acid to 1 kg of the same oxide ore used in Example 4.

The results thus obtained are summarized in Tables 2 and 3, as a comparison to the results obtained on Examples.

Table 1

| No. | Free H₂SO₄ in solution Before leaching (g/ℓ) | After leaching (g/ℓ) | Mg leaching ratio (wt.%) | Deironing ratio (wt.%) |
|---|---|---|---|---|
| Example 1 | 12.5 | 1.5 | 44 | 92 |
| Example 2 | 12.2 | 1.2 | 42 | 95 |
| Example 3 | 12.6 | 0.9 | 50 | 96 |
| Example 4 | 10.2 | 2.8 | 58 | 72 |
| Example 5 | 10.8 | 2.4 | 61 | 76 |

Table 2

| | Ex.1 | Ex.2 | Ex.3 | Ex.4 | Ex.5 | Comp.1 | Comp.2 |
|---|---|---|---|---|---|---|---|
| Ratio of Water and Reused solution | | | | | | | |
| Water(%) | 42 | 42 | 42 | 42 | 22 | 100 | 100 |
| Ni recovered solution(%) | 58 | - | - | 58 | - | - | - |
| Mn recovered solution(%) | - | 58 | 58 | - | 78 | - | - |
| Na/Ore ratio | | | | | | | |
| Before leaching(%) | 0.33 | 0.43 | 0.56 | 0.20 | 0.53 | - | - |
| After leaching(%) | 0.03 | 0.12 | 0.20 | 0.01 | 0.18 | - | - |
| Leaching ratio | | | | | | | |
| Ni(%) | 94.3 | 94.0 | 94.4 | 94.5 | 95.7 | 86.0 | 87.3 |
| Co(%) | 94.8 | 94.8 | 94.6 | 95.4 | 95.4 | 93.6 | 94.0 |
| Ni/impurity concentration ratio in leaching solution | | | | | | | |
| Fe/Ni | 0.17 | 0.16 | 0.18 | 0.22 | 0.20 | 0.48 | 0.57 |
| Al/Ni | 0.07 | 0.04 | 0.07 | 0.09 | 0.08 | 0.23 | 0.31 |
| Cr/Ni | 0.004 | 0.003 | 0.004 | 0.007 | 0.007 | 0.012 | 0.015 |

Table 3

| | Ex.1 | Ex.2 | Ex.3 | Ex.4 | Ex.5 | Comp.1 | Comp.2 |
|---|---|---|---|---|---|---|---|
| Equiv to Ni, Co. | | | | | | | |
| Na hydro-sulfide | 1.2 | } 1.2 | – | 1.2 | 1.2 | – | – |
| Na sulfide | – | | 1.2 | – | – | – | – |
| Hydrogen sulfide | – | – | – | – | – | 2.5 | 2.5 |
| Temperature (°C) | 80 | 80 | 80 | 80 | 80 | 80 | 80 |
| Pressure (kg/cm²) | Normal | Normal | Normal | Normal | Normal | 2.0 | 2.0 |
| Duration (minutes) | 30 | 30 | 30 | 30 | 30 | 60 | 60 |
| Recovery Ni | 99.0 | 98.7 | 98.2 | 99.2 | 99.0 | 68.1 | 70.3 |
| Co | 98.5 | 98.6 | 98.2 | 98.5 | 98.2 | 66.7 | 67.2 |
| Av. particle size of sulfide (μm) | 28 | 28 | 26 | 28 | 27 | 11 | 12 |

## EXAMPLE 6

A 30% sodium carbonate solution was added at 50°C to the solution used in Example 1 from which Ni and Co were recovered as sulfides, until the pH of the solution was adjusted to a value of 8.5. Thus was recovered Mn as manganese carbonate. The resulting solution was filtered off using a filter press. The chemical composition and the recovery of the manganese carbonate thus obtained are given in Table 4.

As a result, manganese carbonate was found to contain 36.3% Mn, 0.86% Ni, 0.09% Co, 0.73% Fe, 2.9% Al, and 0.18% Cr, apparently low in impurity content.

Manganese was obtained at 99.8% recovery, i.e., close to 100% recovery. The liquid after recovering manganese therefrom was found to contain Na, Mg, and Ca, each at a concentration of 6.9 g/$\ell$, 14.5 g/$\ell$, and 0.3 g/$\ell$, respectively. No metal other than those was contained.

## EXAMPLE 7

Manganese was recovered as manganese carbonate in a manner similar to that in Example 6, i.e., by adding sodium carbonate solution to the solution obtained in Example 2 after recovering therefrom Ni and Co as sulfides. The chemical composition of the manganese carbonate thus recovered is given together with its recovery in Table 4.

The liquid after recovering manganese therefrom was found to contain Na, Mg, and Ca, each at a concentration of 8.3 g/$\ell$, 14.7 g/$\ell$, and 0.3 g/$\ell$, respectively. No metal other than those was identified.

## EXAMPLE 8

Manganese was recovered as manganese carbonate in a similar manner as in Example 6, i.e., by adding sodium carbonate solution to the solution obtained in Example 3 after recovering therefrom Ni and Co as sul-

8

fides. The chemical composition of the manganese carbonate thus recovered is given together with its recovery in Table 4.

The liquid after recovering manganese therefrom was found to contain Na, Mg, and Ca, each at a concentration of 10.1 g/$\ell$, 14.8 g/$\ell$, and 0.3 g/$\ell$, respectively. No metal other than those was identified.

EXAMPLE 9

Manganese was recovered as manganese carbonate in a manner similar to that in Example 6, i.e., by adding sodium carbonate solution to the solution obtained in Example 4 after recovering therefrom Ni and Co as sulfides. The chemical composition of the manganese carbonate thus recovered is given together with its recovery in Table 4.

The liquid after recovering manganese therefrom was found to contain Na, Mg, and Ca, each at a concentration of 5.0 g/$\ell$, 2.1 g/$\ell$, and 0.3 g/$\ell$, respectively. No metal other than those was contained

EXAMPLE 10

Manganese was recovered as manganese carbonate in a manner similar to that in Example 6, i.e., by adding sodium carbonate solution to the solution obtained in Example 5 after recovering therefrom Ni and Co as sulfides. The chemical composition of the manganese carbonate thus recovered is given together with its recovery in Table 4.

The liquid after recovering manganese therefrom was found to contain Na, Mg, and Ca, each at a concentration of 3.6 g/$\ell$, 2.0 g/$\ell$, and 0.3 g/$\ell$, respectively. No metal other than those was contained.

COMPARATIVE EXAMPLE 3

Manganese was recovered as manganese carbonate by adding sodium carbonate solution into the solution having obtained after.recovering therefrom Ni and Co as sulfides in Comparative Example 1 until the pH of the solution was adjusted to a value of 8.5. The chemical composition of the thus obtained manganese carbonate is given in Table 4, as a comparison to the results obtained on Examples.

It can be seen that manganese of low quality with a high impurity content is obtained, due to the impurities which have been leached during the high pressure acid leaching, and to the insufficient recovery of Ni and Co by the oxidation.

Table 4

| | Ex.6 | Ex.7 | Ex.8 | Ex.9 | Ex.10 | Comp.Ex.3 |
|---|---|---|---|---|---|---|
| Chemical composition (wt.%) | | | | | | |
| Mn | 36.3 | 34.3 | 33.7 | 34.5 | 34.0 | 18.6 |
| Ni | 0.85 | 1.04 | 1.40 | 0.48 | 0.60 | 6.25 |
| Co | 0.09 | 0.08 | 0.10 | 0.10 | 0.09 | 0.22 |
| Fe | 0.73 | 0.70 | 0.69 | 1.25 | 0.94 | 3.11 |
| Al | 2.90 | 1.89 | 2.76 | 2.92 | 2.67 | 4.94 |
| Cr | 0.18 | 0.12 | 0.17 | 0.20 | 0.21 | 0.25 |
| Mg | 1.25 | 1.27 | 1.22 | 0.22 | 0.18 | 0.71 |
| Ca | 0.87 | 0.84 | 0.80 | 0.79 | 0.75 | 0.48 |
| Mn recovery (%) | | | | | | |
| | 99.8 | 99.9 | 99.9 | 99.7 | 99.8 | 99.7 |

As described in detail in the foregoing, the process for recovering metals from oxide ores according to the first embodiment of the present invention enables recovery of nickel and cobalt as sulfides low in impurities and at high efficiency, yet using no autoclaves. This was achieved by lowering the magnesium content of the starting material in the high pressure acid leaching, thereby economizing on sulfuric acid while efficiently acid-leaching nickel, cobalt, and manganese.

The process for recovering metals from oxide ores according to the second embodiment of the present invention enables efficient recovery of manganese low in impurity content, while producing manganese-free solutions which can be disposed to nature without any post treatments, because the waste water after manganese is recovered contains no metals other than sodium, magnesium, and calcium.

The processes for recovering metals from oxide ores according to the third, fourth, and fifth embodiments of the present invention are such which economize on water, because the solution after recovering metals therefrom are circulated and reused in the high pressure sulfuric acid leaching of oxide ores. Furthermore, those processes take advantage of the sodium having incorporated into the solution, because sodium suppresses leaching of iron, aluminum, and chromium, while accelerating that of nickel and cobalt.

## Claims

1. A process for recovering metals from an oxide ore containing said metals, said process comprising:

    a step (a), which comprises subjecting a previously prepared slurry of said oxide ores and a high pressure acid leaching solution obtained in a separate step (b) to atmospheric leaching in an acidic sulfuric acid solution, to thereby obtain an atmospheric leaching solution and an atmospheric leaching residue;

    a step (b), which comprises reacting the atmospheric leaching residue obtained in the previous step (a) with sulfuric acid under an oxidative atmosphere at a temperature and pressure sufficiently high to form a high pressure acid leaching solution, thereby obtaining the desired high pressure acid leaching solution; and

    a step (c), which comprises neutralizing the atmospheric leaching solution obtained in the step (a) by adding therein a neutralizing reagent, and further adding therein an alkali sulfide compound to recover nickel and/or cobalt therefrom as sulfides.

2. A process according to claim 1 further including a step (d), which comprises adding a carbonate into the solution after nickel and/or cobalt are recovered as sulfides, thereby recovering manganese as manganese carbonate.

3. A process according to claim 1 including a step (d), which comprises circulating and using the solution from which nickel and cobalt are recovered as sulfides, as a rinsing solution for the high pressure acid leaching residue, as a flocculant solution for flocculating and separating the high pressure acid leaching residue from the high pressure acid leaching solution, and as a flocculant solution for flocculating and separating the atmospheric acid leaching residue from the atmospheric acid leaching solution.

4. A process according to claim 2 further including a step (e), which comprises, after the step (d) of recovering manganese as manganese carbonate, circulating and using the solution as a rinsing solution for the high pressure acid leaching residue, as a flocculant solution for flocculating and separating the high pressure acid leaching residue from the high pressure acid leaching solution, and as a flocculant solution for flocculating and separating the atmospheric acid leaching residue from the atmospheric acid leaching solution.

5. A process according to claim 4 including a step (f), which comprises circulating said solution for use as a water for slurrying the oxide ores.

# Fig.1

(Flocculant)

(Water)

A → 1 ← D ← 4 ← (High pressure acid leaching residue)

3 ← (H₂SO₄)

(Flocculant)

2 → B

C

(Neutralizing agent) → 5

→ (Neutralized waste)

E

(Alkali sulfide) → 6 (Sulfidation)

→ F (Ni, Co sulfide)

G

(For flocculant solution) ← → (For rinsing solution)

(Partially waste)

# Fig.2

**European Patent Office**

## EUROPEAN SEARCH REPORT

Application Number

EP 92 30 8812

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 093 526 (BLANCO ET AL) * claim 1 * | 1 | C 22 B 3/00 C 22 B 47/00 |
| X | US-A-4 571 262 (KERFOOT ET AL) * claim 1 * | 1 | |
| X | US-A-4 100 043 (CHOU ET AL) * claim 1 * | 1 | |
| X | FR-A-2 549 492 (CALIFORNIA NICKEL CORPORATON) * claims * | 1 | |
| X | FR-A-2 152 523 (AMERICAN METAL CLIMAX) * claims * | - | |
| A | DATABASE WPIL Section Ch, Week 8821, Derwent Publications Ltd., London, GB; Class M25, AN 88-144476 & JP-A-63 086 824 (KAWATETSU) 18 April 1988 * abstract * | 2 | |
| A | GB-A-2 108 480 (SHERRIT GORDON MINES LIMITED) | | **TECHNICAL FIELDS SEARCHED (Int. Cl.5)** |
| A | US-A-4 410 498 (HATCH ET AL) | | C 22 B |
| A | US-A-4 231 993 (SANDBERG ET AL) | | |

The present search report has been drawn up for all claims

| Place of search | Date of completion of the search | Examiner |
|---|---|---|
| THE HAGUE | 15-01-1993 | MEULEMANS R A M |

EPO FORM 1503 03.82 (P0401)